# EUROPEAN PATENT APPLICATION

(11) **EP 4 219 922 A1**
(43) Date of publication of application: **02.08.2023**
(21) Application number: 22154201.2
(22) Date of filing: 31.01.2022
(51) Int. Cl.: F02D 19/02, F02D 41/00, F02B 25/04

(54) **DEVICE AND METHOD FOR OPERATING A LARGE ENGINE**

(71) Applicant: Winterthur Gas & Diesel Ltd., 8401 Winterthur (CH)
(72) Inventor: TOPALOGLOU, Sotiris, 8472 Seuzach (CH); RÄSS, Konrad, 8457 Humlikon (CH)
(74) Representative: Hepp Wenger Ryffel AG

(57) **Abstract**

The present invention relates to an internal combustion engine (10) which can be operated at least in a gas mode and to a method for operating an internal combustion engine. The internal combustion engine (10) is a large vessel engine or a stationary engine, which is operable a least in a gas mode. The internal combustion engine (10) comprises at least one cylinder (11) having an inner diameter (12) of at least 200mm, and at least one gas admission valve (13) for supplying fluid fuel to the cylinder (11). The internal combustion engine (10) comprises a turbocharger (14). The internal combustion engine (10) comprises a pressure measuring unit with at least one sensor (15) for providing a signal representative of a pressure within the at least one cylinder (11) and a control unit (16) which is configured to receive a signal from the pressure measuring unit, to determine the crank angle of the firing pressure, to determine a difference between the determined crank angle and a predetermined optimal crank angle, in particular after a new load has been demanded. The control unit (16) is configured to keep the difference between the determined crank angle and the predetermined optimal crank angle within a predetermined interval and the control unit (16) is configured to adapt the air-to-fuel ratio. The control unit (16) is configured to adapt an amount of air supplied by the turbocharger (14) and/or to adapt the admission rate of fluid fuel, and/or the control unit (16) is configured to adapt a change of the amount of air supplied by the turbocharger (14) and/or to adapt a change of the admission rate of fluid fuel, in particular in case a new load is demanded.

## Description

The present invention relates to an internal combustion engine which can be operated a least in a gas mode and to a method for operating an internal combustion engine.

The present invention preferably relates to an internal combustion engine like a large marine or ship engine or a stationary engine whose cylinders have an inner diameter of at least 200 mm. The engine preferably is a two-stroke engine or a two-stroke cross head engine.

The engine can be a gas engine, a dual fuel or a multi fuel engine. Burning of gaseous fuel or of liquid and/or gaseous fuels in such engines is possible as well as self-igniting or forced igniting.

The term internal combustion engine generally also refers to large engines which can be operated not only in diesel mode, which is characterized by the self-ignition of the fuel, but also in Otto mode, which is characterized by the positive ignition of the fuel, or in mixtures of the two, for example by a spark ignition. Furthermore, the term internal combustion engine includes in particular dual-fuel engines and large engines in which the self-ignition of the fuel is used for the positive ignition of another fuel.

The engine has at least one cylinder having a piston therein. The piston is connected to a crankshaft. The piston reciprocates between a top dead center (TDC) and a bottom dead center (BDC) during operation of the engine. The cylinder typically has at least one air passage opening for intake, the air inlet in particular arranged in the liner of the cylinder, and at least one air passage opening for exhaust, the exhaust outlet in particular arranged in the cover of the cylinder. Preferably, the air inlet is in fluid connection with a scavenging air receiver.

The internal combustion engine can be a longitudinally flushed two-stroke engine.

Engine speed is preferably below 800 RPM (4-stroke) and more preferably below 200 RPM (2-stroke) which indicates the designation of low speed engines.

Fuel can be diesel or marine diesel oils or heavy fuel oils or emulsions or slurries or methanol or ethanol as well as gases like liquid natural gas (LNG) liquid petrol gas (LPG) and so on.

Further possible fuels which might be added on request are: LBG (Liquified Biogas), biological Fuels (e. g. Algae fuel or Seaweed Oil), hydrogen, synthetic fuels from CO2 (e. g. made by Power-To-Gas or Power-To-Liquid).

Large ships, in particular vessels for transport of goods, usually are powered by internal combustion engines, in particular diesel and/or gas engines, mostly two-stroke, cross head engines.

Within this application the internal combustion engine can be operated a least in a gas mode. Fluid fuel is used for torque-generating. Fluid fuel can be provided by gas admission valves as a gas fuel or as a pressurized gas, namely a liquid . In the gas mode, additionally, a small amount of a liquid fuel, sometimes referred to as pilot injection, may be injected to carry out an induced ignition.

The internal combustion engine comprises a turbocharger, which increases the amount of air supplied to the cylinder using the exhaust gas discharged from the cylinder. The air compressed by the turbocharger can be supplied to the scavenging receiver which is in fluid connection to the air passage opening for intake.

Besides fresh air and fluid fuel an inert gas, such as exhaust gas, may be introduced into the cylinder. The engine may comprise a high-pressure or a low-pressure exhaust gas recirculation path. For the low pressure exhaust gas recirculation the exhaust gas passes the turbine of the turbocharger before it is mixed to the fresh air and/or passes the compressor of the turbocharger. The exhaust gas may enter the cylinder as part of the scavenging air.

Abnormal combustion processes, such as pre-ignition, knocking or misfiring, occur in particular when the ratio of fresh air to gas, i.e. the air-to-fuel ratio or air-fuel equivalence ratio, also called lambda, is not within a certain range.

If the gas content is too high, the air-fuel mixture becomes too rich. The combustion of the mixture takes place too fast or too early, for example by self-ignition, which can lead to the pre-ignition or to knocking of the engine. If the air content is too high, the air-fuel mixture is too lean and misfiring can occur, which of course also has a negative effect on the efficient and low-pollution operation of the engine. In particular, these two states of too high gas content and too high air content are designated as abnormal combustion processes. Thus, in the gas mode one strives for a combustion process without self-ignition of the air-gas mixture. The combustion process shall take place between the limits where the air-gas mixture is neither too rich nor too lean.

Modern 4-stroke Otto-cycle engines use a closed-loop lambda control, measuring the oxygen content in the exhaust gases and control the quantity of fuel injected in the engine, to keep the lambda within a desirable limit and to avoid rich combustion.

On 2-stroke engines, the lambda measurement can be challenging due to the cylinder scavenging process that allows fresh air to come through the inlet ports while the exhaust valve is open, mixing with the exhaust gases. Thus, measuring the residual combustion oxygen in the exhaust gases is not reliable.

It is known, that to reduce or to avoid abnormal combustion processes, inert gas, such as exhaust gas, can be introduced into the cylinder.

Due to changing ambient conditions, for example ambient temperatures and due to specific running conditions a change of combustion phasing may happen. Generally this may lead to a decrease of engine efficiency. When firing pressures are too high, low combustion stability or methane slip may occur. The optimum of the firing pressure peak may be between 5° and 8°CA (5° to 8° degree after the top dead centre of the crank, corresponding to 0°CA). In this region the efficiency, the emissions and the reliability of the engine is at its optimum.

The optimal crank angle of the firing pressure depends on the load of the engine. A control unit may be adapted to use or may comprise a table wherein the relation between load and optimal crank angle is stored, typically called vector for the setpoint.

From EP 3 722 572 A1 it is known, that the firing pressure peak angle may be adjusted by adapting the pilot fuel injection timing, by adapting the EGR rate, by adapting the amount of added fuel, by adapting the scavenge air pressure and/or by adapting the amount of an inert addition.

Internal combustion engines used for propulsion of vessels often have to handle fast load changes, for example, rudder operation, when the load is suddenly increased. The speed controller maintains the engine speed at the current levels during the fast load changes by increasing the total fuel injected into the cylinders.

Due to the significant inertia of the air path on the marine 2-stroke engines caused by heavy turbochargers, a big volume of scavenging air receivers and long air paths, there is a risk that the air-to-fuel ratio (or lambda) may drop significantly, which can result in pre-ignition, knocking and/or misfiring.

Pre-ignition, knocking and/or misfiring may also occur in cases of a sudden drop of the load when due to the slow reaction of the turbocharger the air-to-fuel ratio (lambda) is too high.

EP3409928A1 discloses a method of controlling a gas engine connected to a turbocharger. A knocking control operation is performed during a steady operation. In a case where a load of the gas engine increases during the steady operation, when a degree of increase in the load is relatively small, an actual fuel injection amount is gradually increased while the ignition timing is kept. When the degree of increase in the load is relatively great, the ignition timing is retarded and then the actual fuel injection amount is gradually increased. Knocking may be supressed.

It is an object of the present invention to avoid the drawbacks of the prior art and in particular to provide an internal combustion engine and a method of operating an internal combustion engine with better performance during sudden load changes. According to the invention, the internal combustion engine is a large engine or a stationary engine and is operable at least in a gas mode.

Within this application being operable at least in a gas mode means, that a fuel gas is supplied into the cylinder of the internal combustion engine or a high pressurized fuel gas, that is a fuel liquid, is supplied to the cylinder which immediately vaporizes when entering the cylinder.

The internal combustion engine comprises at least one cylinder which has an inner diameter of at least 200 mm.

The internal combustion engine comprises at least one gas admission valve for supplying fluid fuel to the cylinder, wherein fuel means fuel gas or high pressurized fuel liquid.

The internal combustion engine further comprises at least one turbocharger, each turbocharger having a turbine and a compressor.

The internal combustion engine comprises a pressure measuring unit with at least one sensor for providing a signal representative for a pressure within the at least one cylinder. The at least one sensor may be a pressure sensor for measuring the pressure within the cylinder. The pressure measuring unit may comprise a sensor for each cylinder.

Each cylinder may comprise at least one pressure measuring unit. At least one pressure sensor may be provided for each of the cylinders.

The pressure measuring unit may be configured to measure the pressure within the cylinder over a number of cycles, for example over 3-10, preferably 4-6 cycles and to determine an averaged pressure curve over the combustion cycle.

The internal combustion engine further comprises a control unit which is configured to receive a signal from the pressure measuring unit and to determine the crank angle of the firing pressure.

Typically, the crank angle of the firing pressure is the angle at the absolute maximum or peak of the pressure curve over a cycle.

The control unit is further configured to compare the crank angle of the firing pressure with a pre-determined optimal crank angle. The pre-determined optimal crank angle may depend on the load and may be taken from a map or from a table which has for example been predetermined in a shop test.

The control unit is configured to determine the difference between the determined crank angle and the pre-determined optimal crank angle, in particular after a new load has been demanded.

As long as this difference is within a pre-determined interval it can be supposed, that during combustion there is no risk of pre-ignition, knocking and/or misfiring.

However, if the difference is greater than a predetermined interval, an engine parameter has to be adjusted in order to avoid pre-ignition, knocking and/or misfiring. It can be assumed, that the air-to-fuel ratio is not within a range for providing an undisturbed combustion.

Thus, in order to keep the difference between the determined crank angle and a predetermined optimal crank angle within a predetermined interval, the control unit is configured to adapt the air-to-fuel ratio.

To adapt the air-to-fuel ratio the control unit is configured to adapt an amount of air supplied by the turbocharger and/or to adapt the admission rate of fluid fuel, preferably within one cycle.

Furthermore, the control unit is configured to adapt a change of the amount of air supplied by the turbocharger and/or to adapt a change of the admission rate of fluid fuel, particularly in case a new load is demanded.

Generally, the fluid fuel is admitted to the cylinder during a specific time interval per cycle. As long as load as not changed, typically the time window per cycle for admitting fluid fuel remains constant.

If a higher load is requested, the time interval for admitting fluid fuel has to be enlarged. If a lower load is requested, the time interval can be shortened.

Hence, for higher loads there is a higher admission rate and for lower loads there is a lower admission rate.

In order to prevent pre-ignition, knocking and/or misfiring, the air-to-fuel ratio has to remain stable even during a change of load.

Thus, if the admission rate is changed very quickly, the amount of air supplied by the turbo charger has to be changed also very quickly. In analogy, if the amount of air supplied by the turbocharger can only by changed slowly, the change of the admission rate has to be changed also slowly.

The control unit may be configured to adapt the amount of air supplied by the turbocharger by increasing or decreasing the amount.

The internal combustion engine may comprise an accelerating device for accelerating the turbocharger in order to supply more fresh air than without acceleration.

The control unit may be configured to increase the amount of air supplied by the turbo charger by additionally accelerating the turbo charger if the difference is below a lower limit of the pre-determined interval.

In order to do so, the control unit may be configured for setting the acceleration device. The acceleration device may comprise an electromotor.

Additionally or alternatively the internal combustion engine may comprise a releasing valve for releasing air provided by the turbo charger upstream a scavenging air receiver and the control unit may be configured to decrease the amount supplied by the turbocharger by blowing off fresh air provided by the turbo charger upstream the scavenging air receiver if the difference is above an upper limit of the pre-determined interval.

Thus, the air-to-fuel ratio within the cylinder can be adjusted by providing more or less air by the turbo charger. Alternatively or additionally, the control unit may be configured to adapt the admission rate of fluid fuel by decreasing the admission rate if the difference is below a lower limit of the pre-determined interval and/or by increasing the admission rate if the difference is above an upper limit by the pre-determined interval.

The predetermined interval may correspond to a deviation of ± 5° from the optimal crank angle, preferably ±3°, more preferably ±2°, even more preferably ±1°.

It turned out, that the occurrence of a difference between the actual crank angle of the firing pressure and the pre-determined optimal crank angle is a sensitive and early indicator for the risk of pre-ignition, knocking and/or misfiring. As long as the difference remains within the predetermined interval with respect to the optimal crank angle, the risk can be considered to be negligible.

The control unit may be configured to adapt the admission rate by adjusting the opening time per cycle for the at last one gas admission valve, in particular for at least one gas admission valve of each cylinder.

In a preferred embodiment of the invention, the control unit may be configured to adapt the change of the admission rate by stepwise changing the opening time per cycle of the at least one gas admission valve from a current opening time per cycle to a target opening time per cycle.

The target opening time per cycle corresponds to a new demanded load.

The change of the opening time takes place within a number of n cycles, wherein the number n is greater than 1. Hence, the admission rate is not changed suddenly within one cycle but is changed slowly. Preferably, the increase and/or the decrease of the admission rate changes linearly during the number of n cycles.

The control unit may be configured to set the number n.

The number of cycles for adapting the opening time may depend on
- the current opening time per cycle,
- the target opening time per cycle,
- the difference of the target opening time per cycle and the current opening time per cycle
   and/or on
- the difference between the actual crank angle of the firing pressure and the pre-determined optimal crank angle.

The number n of the cycles necessary to adapt the fuel admission rate may be taken from a map which has been determined in a shop test.

It is assumed that the engine works at first load with a first opening time per cycle and when a new load is demanded, a target opening time per cycle is necessary. Thus, as the change of the admission rate takes N cycles the response time for reaching a new admission level is enlarged from one cycle, which means a sudden change of the admission rate, to N cycles, which means a longer response time. After the response time of N cycles, the turbocharger is able to supply the respective amount of fresh air, which is necessary to keep the air-to-fuel ratio in a reasonable interval.

In case a new higher load is demanded, the control unit may be configured to adapt the change of the admission rate by setting a shorter opening time per cycle of the at least one gas admission valve as compared to the opening time per cycle corresponding to the new demanded higher load, which is the target opening time per cycle. The control unit may further be configured to successively increase the opening time per cycle until the opening time per cycle corresponds to the new demanded load that is the target opening time.

When a new higher load is demanded a target opening time per cycle may be set, which corresponds to the new load, the control unit may be configured to set the target opening time per cycle within one cycle and to check, if the air-to-fuel ratio keeps basically constant and/or remains at least within an acceptable range, by checking if the difference between the determined crank angle and a predetermined optimal crank angle is within a predetermined interval.

If so, the opening time may be kept. If not, a new, smaller opening time may be set, for example a second opening time which is only higher than the first or starting opening time corresponding to the old load by the difference between the target opening time per cycle and the first opening time per cycle divided by N.

After this, the control unit may be configured to set the target opening time per cycle within one cycle and to check again, if the difference between the determined crank angle and a predetermined optimal crank angle is within a predetermined interval. If so, the opening time may be kept. If not, a new third opening time may be set, for example which is higher than the second opening time by the difference between the target opening time per cycle and the first opening time per cycle divided by N.

This procedure may be repeated until the target opening time may be kept or until the target opening time is reached by successively increasing the opening time.

In analogy, in case a new lower load is demanded the control unit may be configured to adapt the change of the admission rate by setting a longer opening time per cycle of the at least one gas admission valve as compared to the target opening time per cycle corresponding to a new demanded lower load. The control unit may be further configured to successively decrease the opening time per cycle down to the opening time per cycle corresponding to the new demanded load, hence to the target opening time.

The increase or the decrease of the opening time may be chosen linearly over the number of cycles for reaching the target opening time.

The control unit may be configured to receive an emergency signal and to stop adapting the air-to-fuel ratio after receiving the emergency signal. The internal combustion engine may comprise an input device for receiving an emergency signal, for example initiated by a user.

Situations may occur, which do not allow a slow change of the fuel admission rate. In these situations, pre-ignition, knocking and misfiring may be acceptable and it may not be necessary to keep the air-to-fuel ratio within a predetermined interval.

A user may stop the process for keeping the air-to-fuel ratio within a certain interval.

In particular, the control unit may be configured to instantaneously set a new opening time per cycle of the at least one gas admission valve which corresponds to a new demanded load.

According to the invention a method for operating an internal combustion engine as described above comprises the following steps. A signal representative of a pressure within at least one cylinder is provided. A crank angle of the firing pressure is determined. A difference between the determined crank angle and a pre-determined optimal crank angle is determined, in particular after a new load has been demanded.

The method further comprises the steps of keeping the difference between the determined crank angle and the pre-determined optimal crank angle within a pre-determined interval, in order to keep the air-to-fuel ratio within an optimal interval.

To keep the air-to-fuel ratio within an optimal interval, the amount of air supplied by the turbocharger and/or the admission rate of fluid fuel is adapted.

Additionally or alternatively, a change of the amount of air supplied by the turbocharger and/or a change of the admission rate of fluid fuel is adapted, in particular if a new load is demanded.

The air-to-fuel ratio may be adapted by adapting the admission rate of fluid fuel corresponding to an opening time per cycle, if the difference between the determined crank angle and the pre-determined optimal crank angle is not within a predetermined interval.

After a new load has been demanded, the air-to-fuel ratio may be adapted by adapting a change of the admission rate of fluid fuel.

The admission rate may be decreased if the difference is below a lower limit of the pre-determined interval. The admission rate may be increased if the difference is above an upper limit of the pre-determined interval.

The admission rate of fluid fuel may be adapted by changing the opening time per cycle of the at least one gas admission valve. The change of the admission rate may be adapted by adapting the number of cycles n for changing the opening time per cycle of the at least one gas admission valve from a current opening time per cycle to a target opening per cycle. The target opening time per cycle corresponds to the new demanded load and the current opening time per cycle corresponds to the old demanded load.

Gas admission valves may be arranged to supply the fluid fuel into the cylinder between the lower side and the upper side of the cylinder, preferably in the lower half of the piston stroke.

A gas fuel supply unit comprising the gas admission valves may supply gaseous fuel into the cylinder by vaporizing LNG stored in a LNG tank.

The pressure measuring unit may be connected to the control unit through a wire communication or through a wireless communication.

In the following, the invention is further explained in embodiments by means of figures. Same reference numbers refer to functionally corresponding features.
- Figure 1:: shows a schematic view of an internal combustion engine;
- Figure 2:: schematically shows the load, the admission rate of fluid fuel, the amount of air supplied by the turbocharger and the air-to-fuel ratio versus time;
- Figure 3:: schematically shows different ways of changing the opening time per cycle from a current opening time to a target opening time.

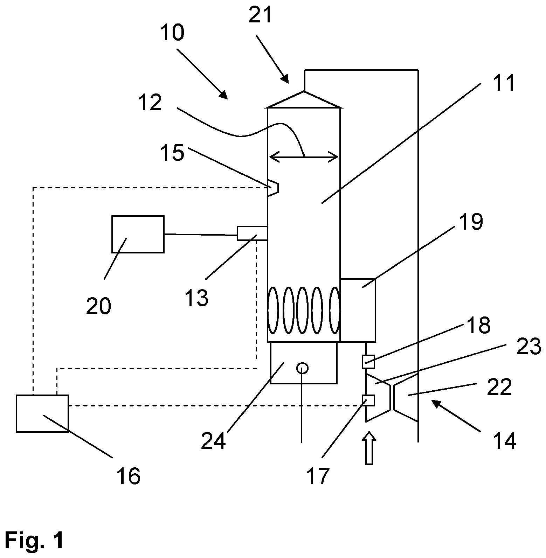

Figure 1 shows a schematic view of an internal combustion engine 10. The internal combustion engine 10 is a large vessel engine which is operable in a gas mode. The internal combustion engine 10 comprises a cylinder 11 having an inner diameter 12 of at least 200 mm.

The internal combustion engine 10 comprises a gas admission valve 13 for supplying fluid fuel to the cylinder 11. The fluid fuel is stored in a fluid fuel tank 20.

Exhaust gas may leave the cylinder 11 via an exhaust outlet 21, typically arranged in the cover of the cylinder 11. The exhaust passes a turbine 22 of a turbocharger 14. Fresh air is supplied to the cylinder 11 via a compressor 23 of the turbine 14. The fresh air may be supplied to a scavenging air receiver 19 from where the fresh air enters the cylinder 11.

The internal combustion engine 10 comprises a pressure measuring unit with a pressure sensor 15 for providing a signal representative of a pressure within the cylinder 11. The signal may be received by a control unit 16 which determines the crank angle of the firing pressure and the difference between the determined crank angle and the predetermined optimal crank angle. The crank angle corresponds to the position of the piston 24.

Depending on the difference, the control unit 16 may set the amount of air supplied by the turbocharger 14 or the change of an amount of air supplied by the turbocharger 14 in case a new load is demanded.

Additionally or alternatively the control unit 16 may set the admission rate of fluid fuel admitted through the admission valve 13 and/or set a change of the admission rate in case a new load is demanded.

To increase the amount of air supplied by the turbocharger 14 the control unit may set an accelerating device 17, for example an electromotor, for accelerating the compressor 23 of the turbocharger 14. The control unit 16 may decrease the amount of air supplied by the turbocharger 14 by blowing off fresh air provided by the turbocharger 14 via a releasing valve 18. A releasing valve 18 may be arranged upstream the scavenging air receiver 19.

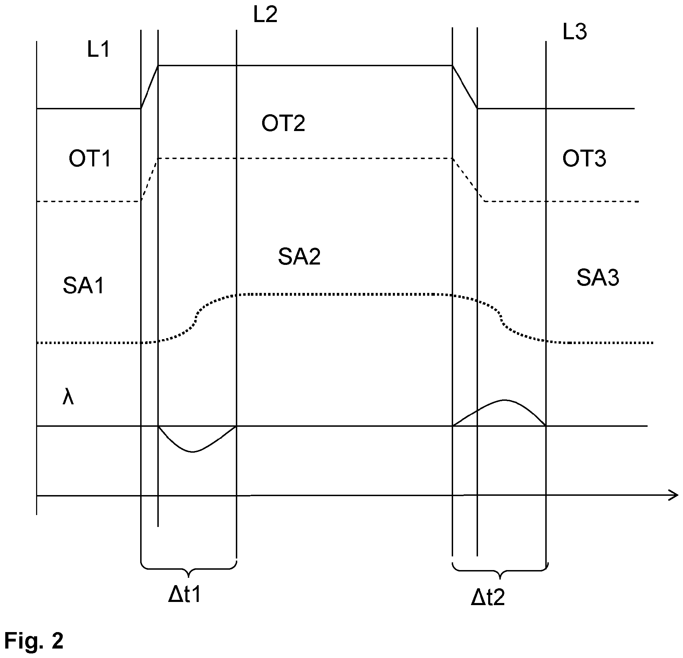

Figure 2 schematically shows the load, the admission rate of fluid fuel, the amount of air supplied by a turbocharger and the air-to-fuel ratio versus time. Starting from a load L1 a new load L2, which is higher than the first load L1, may be demanded. Correspondingly, a first admission rate which corresponds to a first opening time per cycle OT1 of the admission valve 13 has to be enlarged to a new admission rate which corresponds to a second opening time per cycle OT2 of the admission valve 13.

Due to the inertia of the turbocharger 14 it takes some time until the amount of air supplied by the turbocharger rises from a first level SA1 to a second level SA2. Consequently the air-to-fuel ratio λ may decrease during a time interval Δt1. In analogy, when a new load L3 is demanded, which is lower than a load L2, a new admission rate corresponding to a third opening time per cycle OT3 has to be provided, which is smaller than the second admission rate corresponding to the second opening time per cycle OT2. Again, due to the inertia of the turbocharger 14 it takes some time, until the amount of air supplied by the turbocharger 14 reaches the adequate level, which is smaller than the air supplied by the turbocharger SA2 which corresponds to the load L2. Hence, during a time interval Δt2 the air-to-fuel ratio λ may be higher than the air-to-fuel ratio for the steady state with a constant load. The deviation of the air-to-fuel ratio from the constant and steady state value may cause misfiring, pre-ignition and/or knocking.

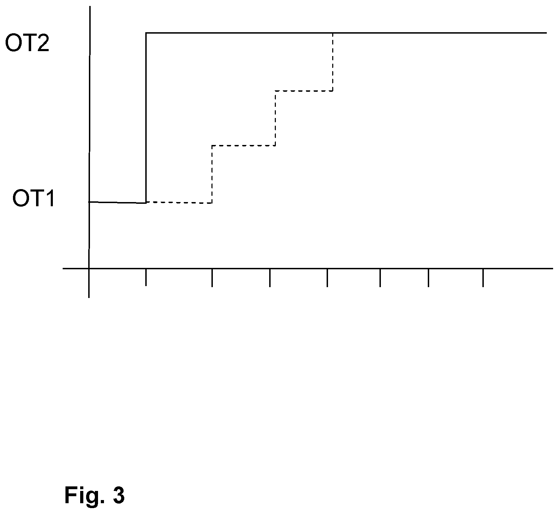

Figure 3 schematically shows different ways of changing the opening time per cycle from a first opening time OT1 corresponding to a first load to a second opening time OT2 corresponding to a second load which is higher than the first load. The opening time can be changed within one cycle, such that immediately a new admission rate is provided to the cylinder.

As shown in figure 2 this might lead to a reduced air-to-fuel ratio. Instead, the opening time may be changed from the first opening time OT1 to the second opening time OT2 with four cycles (dashed line). Thus, the admission rate is slowly increased. The number of steps corresponds to the inertia of the turbocharger, such that the supplied fuel and the supplied fresh air is provided with almost the same ratio during the change of the load.

## Claims

1. Internal combustion engine (10), namely a large vessel engine or a stationary engine, which is operable at least in a gas mode,
the internal combustion engine (10) comprising at least one cylinder (11) having an inner diameter (12) of at least 200mm,
the internal combustion engine (10) comprising at least one gas admission valve (13) for supplying fluid fuel to the cylinder (11);
the internal combustion engine (10) comprising a turbocharger (14) and
the internal combustion engine (10) comprising a pressure measuring unit with at least one sensor (15) for providing a signal representative of a pressure within the at least one cylinder (11),
the internal combustion engine (10) comprising a control unit (16) which is configured
- to receive a signal from the pressure measuring unit,
- to determine the crank angle of the firing pressure;
- to determine a difference between the determined crank angle and a predetermined optimal crank angle, in particular after a new load has been demanded;
**characterized in that**
the control unit (16) is configured to keep the difference between the determined crank angle and the predetermined optimal crank angle within a predetermined interval and the control unit (16) is configured to adapt the air-to-fuel ratio, wherein
- the control unit (16) is configured to adapt an amount of air supplied by the turbocharger (14) and/or to adapt the admission rate of fluid fuel,
and/or
the control unit (16) is configured to adapt a change of the amount of air supplied by the turbocharger (14) and/or to adapt a change of the admission rate of fluid fuel, in particular in case a new load is demanded.

2. Internal combustion engine (10), according to claim 1,
wherein
the control unit (16) is configured to adapt the amount of air supplied by the turbocharger (14) by increasing or decreasing the amount of air supplied by the turbocharger (14) .

3. Internal combustion engine (10), according to claim 2,
wherein
the internal combustion engine comprises an accelerating device (17) for accelerating the turbocharger and the control unit is configured to increase the amount of air supplied by the turbocharger (14) by additionally accelerating the turbocharger (14), if the difference is below a lower limit of the predetermined interval.

4. Internal combustion engine (10), according to claim 2 or 3,
wherein
the internal combustion engine (10) comprises a releasing valve (18) for releasing air provided by the turbocharger (14) upstream a scavenging air receiver (19) and the control unit (16) is configured to decrease the amount of air supplied by the turbocharger (14) by blowing off fresh air provided by the turbocharger (14) air upstream the scavenging air receiver (19), if the difference is above an upper limit of the predetermined interval.

5. Internal combustion engine (10), according to any one of the preceding claims, wherein
the control unit (16) is configured to adapt the admission rate of fluid fuel by decreasing the admission rate, if the difference is below a lower limit of the predetermined interval
and/or
by increasing the admission rate, if the difference is above an upper limit of the predetermined interval.

6. Internal combustion engine (10) according to one of the preceding claims, wherein the control unit (16) is configured to adapt the admission rate by adjusting the opening time per cycle of the at least on gas admission valve (13).

7. Internal combustion engine (10) according to one of the preceding claims, wherein the control unit (16) is configured to adapt the change of the admission rate by changing the opening time per cycle of the at least on gas admission valve (13) from a current opening time per cycle to a target opening time per cycle corresponding to a new demanded load, within a number n of cycles, wherein the number n is greater than 1, and
preferably the number n depends on the
current opening time per cycle, the target opening time per cycle and/or a difference of the target opening time per cycle and the current opening time per cycle.

8. Internal combustion engine (10) according to one of the preceding claims, wherein in case a new higher load is demanded the control unit (16) is configured to adapt the change of the admission rate by
- setting a shorter opening time per cycle of the at least one gas admission valve (13) as compared to the opening time per cycle belonging to the new demanded higher load and
- successively increasing the opening time per cycle up to the opening time per cycle corresponding to the new demanded load.

9. Internal combustion engine (10) according to one of the preceding claims, wherein in case a new lower load is demanded the control unit (16) is configured to adapt the change of the admission rate by
- setting a longer opening time per cycle of the at least on gas admission valve (13) as compared to the opening time per cycle belonging to a new demanded lower load and
- by successively decreasing the opening time per cycle down to the opening time per cycle belonging to the new demanded load.

10. Internal combustion engine (10) according to one of the preceding claims, wherein the control unit (16) is configured to receive an emergency signal and to stop adapting the air-to-fuel ratio after receiving the emergency signal, and in particular to instantaneously set a new opening time per cycle of the at least on gas admission valve (13) which corresponds to a new demanded load.

11. Method for operating an internal combustion engine according to one of claims 1-10, the method comprising the steps of
- providing a signal representative of a pressure within at least one cylinder (11);
- determining the crank angle of the firing pressure;
- determining a difference between the determined crank angle and a predetermined optimal crank angle, in particular after a new load has been demanded,
**characterized in that** the method comprises the steps of keeping the difference between the determined crank angle and the predetermined optimal crank angle within a predetermined interval
- by adapting an amount of air supplied by the turbocharger (14) and/or by adapting the admission rate of fluid fuel, or
- by adapting a change of the amount of air supplied by the turbocharger (14) and/or by adapting a change of the admission rate of fluid fuel, particularly in case a new load is demanded.

12. Method according to claim 11, wherein
the air-to-fuel ratio is adapted by adapting an admission rate of fluid fuel, if the difference is not within a pre-determined interval or by adapting a change of the admission rate of fluid fuel after a new load has been demanded.

13. Method according to claim 12, wherein the admission rate is decreased if the difference is below a lower limit of the predetermined interval and the admission rate is increased, if the difference is above an upper limit of the predetermined interval.

14. Method according to one of claims 10 to 13, wherein the admission rate of fluid fuel is adapted by changing the opening time per cycle of the at least on gas admission valve (13) .

15. Method according to one of claims 10 to 14, wherein the change of the admission rate of fluid fuel is adapted by adapting the number of cycles for changing the opening time per cycle of the at least on gas admission valve (13) from a current opening time per cycle to a target opening time per cycle.
